# EUROPEAN PATENT SPECIFICATION

(11) **EP 2 425 184 B1**
(45) Date of publication and mention of the grant of the patent: **21.03.2018**
(21) Application number: 09844078.7
(22) Date of filing: 23.06.2009
(51) Int. Cl.: F24F 1/00

(54) **AIR CONDITIONER**
KLIMAANLAGE
CLIMATISEUR

(30) Priority: 28.04.2009 KR 20090036849
(43) Date of publication of application: 07.03.2012
(73) Proprietor: LG Electronics Inc., Seoul 150-721 (KR)
(72) Inventor: SHIM, Ho Jin, Changwon-si Kyungsangnam-do 641-110 (KR); KIM, Chang Bum, Changwon-si Kyungsangnam-do 641-110 (KR); PARK, Tae Byoung, Changwon-si Kyungsangnam-do 641-110 (KR); KIM, Ill Uk, Changwon-si Kyungsangnam-do 641-110 (KR); PARK, Sung Kwan, Changwon-si Kyungsangnam-do 641-110 (KR); KIM, In Kyu, Changwon-si Kyungsangnam-do 641-110 (KR); RYU, Si Wan, Changwon-si Kyungsangnam-do 641-110 (KR); BAEK, Seung Myun, Changwon-si Kyungsangnam-do 641-110 (KR)
(74) Representative: Cabinet Plasseraud
(86) International application number: PCT/KR2009/003352
(87) International publication number: WO 2010/126196

(56) References cited:
- CA-A1- 2 467 022
- JP-A- 2003 014 267
- JP-A- 2003 014 267
- KR-A- 20080 055 450
- KR-A- 20090 017 287
- KR-A- 20090 017 287
- KR-B1- 0 123 443
- US-A1- 2004 216 353

## Description

### [Technical Field]

The present invention relates to an air conditioner, and more particularly, to an air conditioner which can efficiently exterminate insect pests.

### [Background Art]

In general, in order to provide a pleasant indoor environment to the user, an air conditioner cools or heats an indoor space or purifies the air by using a refrigerant freezing cycle consisting of a compressor, a condenser, an expansion device and an evaporator. The air conditioner is roughly classified into a split type air conditioner and an integral type air conditioner.

The split type air conditioner and the integral type air conditioner are identical in function. In the case of the split type air conditioner, a cooling/heat radiation device is installed in an indoor unit, a heat radiation/cooling device and a compression device are installed in an outdoor unit, and the indoor unit and the outdoor unit are connected through a refrigerant tube. The integral type air conditioner integrates cooling and heat radiation functions. The integral type air conditioner is installed through holes punched in a wall of a house, or fixed to a window of the house.

Air conditioners are mostly operated in an environment of high temperature and high humidity. Also, optimal climate conditions in which various kinds of insect pests (flies, mosquitoes, ticks, etc.) can inhabit are maintained in an environment of high temperature and high humidity. Such air conditioner is described, for example, in JP 2003/014267A.

Along with a tendency to add various functions to an air conditioner and make the air conditioner more complicated, on-going attempts to exterminate insect pests, in addition to air conditioners, are being made.

### [Disclosure of the invention]

### [Technical Problem]

It is, therefore, an object of the present invention to provide an air conditioner which can efficiently exterminate insect pests by outputting a plurality of sound wave signals from an output unit.

Another object of the present invention is to provide an air conditioner which can eliminate tolerance of insect pests to a sound wave signal by sequentially outputting a plurality of sound wave signals.

Still another object of the present invention is to provide an air conditioner which can easily perform the frequency change of a sound wave signal.

Yet still another object of the present invention is to provide an air conditioner in which an output unit for outputting a sound wave signal of a predetermined frequency can be easily and efficiently arranged.

### [Technical Solution]

To achieve the foregoing objects and other objectives and advantages, there is provided an air conditioner in accordance with an embodiment of the present invention, including: an indoor unit main body having an air inlet for drawing room air and an air outlet for discharging conditioned air; and an insect-pest exterminating device attached to the indoor unit main body, and for exterminating insect pests, the insect-pest exterminating device including: an insect-pest exterminating device controller for outputting a plurality of pulse signals; an amplifier for amplifying the level of the pulse signals; and an output unit for converting the pulses signals whose level is amplified into a plurality of sound wave signals and outputting the same, wherein the insect-pest exterminating device sequentially outputs a first, a second, a third, a fourth and a fifth sound wave signals having different frequencies, and wherein a frequency of the second sound wave signal is higher than frequencies of the first and the third sound wave signals in consideration of the heat generated in the insect-pest exterminating device.

### [Advantageous Effects]

As described above, the air conditioner in accordance with the embodiment of the present invention is able to efficiently exterminate insect pests by outputting a plurality of sound wave signals.

In particular, tolerance of insect pests to a sound wave signal can be eliminated by sequentially outputting a plurality of sound wave signals.

Furthermore, the air conditioner in accordance with the embodiment of the present invention can be easily and accurately implemented since a plurality of sound wave signals having different frequencies are sequentially output.

Furthermore, an output unit for sequentially outputting a plurality of sound wave signals having different frequencies can be efficiently arranged.

### [Description of Drawings]

The above and other objects and features of the present invention will become apparent from the following description of preferred embodiments given in conjunction with the accompanying drawings, in which:
FIG. 1 is a perspective view when one embodiment of an air conditioner according to the present invention is stopped;
FIG. 2 is a perspective view when one embodiment of the air conditioner according to the present invention is in operation;
FIG 3 is an exploded perspective view of one embodiment of the air conditioner according to the present invention;
FIG. 4 is a view showing an example in which a speaker of an insect-pest exterminating device is installed;
FIG. 5 is a schematic interior block diagram of an air conditioner in accordance with an embodiment of the present invention;
FIG. 6 is a view showing the generation of a pulse signal using pulse width modulation in an insect-pest exterminating device controller of FIG. 5; and
FIGS. 7 to 9 are views showing various examples of sound wave signals output from an insect-pest exterminating device.

### Best Mode for Carrying out the Invention

Hereinafter, embodiments of the present invention will be described in detail with reference to the accompanying drawings.

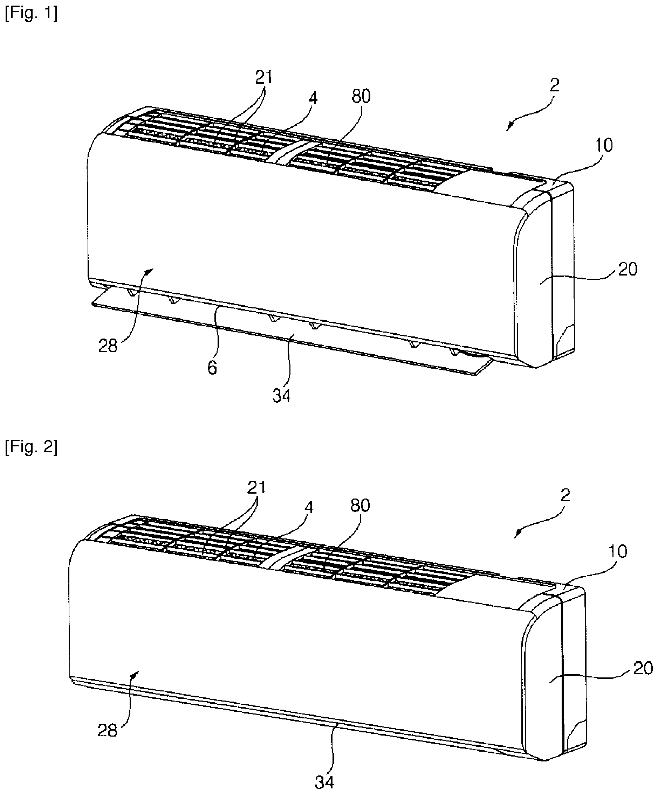

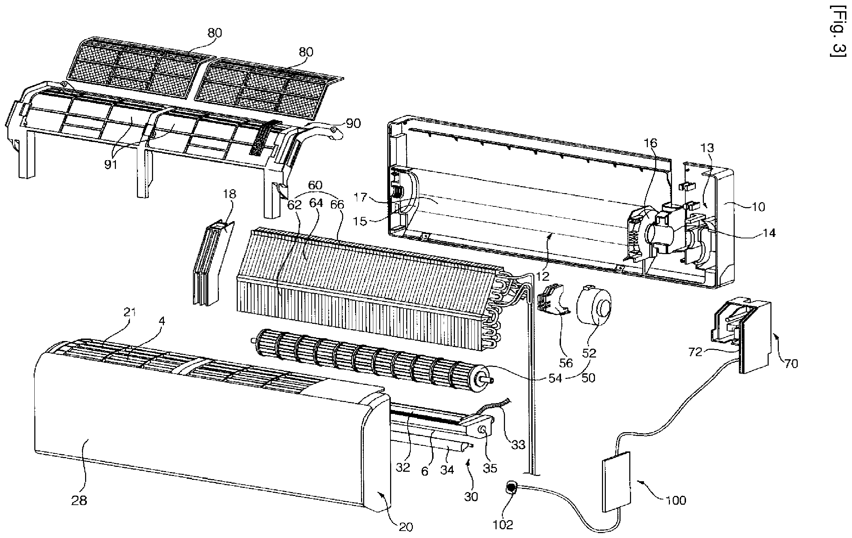

FIG. 1 is a perspective view when one embodiment of an air conditioner according to the present invention is stopped. FIG. 2 is a perspective view when one embodiment of the air conditioner according to the present invention is in operation. FIG 3 is an exploded perspective view of one embodiment of the air conditioner according to the present invention.

Referring to the drawings, the air conditioner in accordance with this embodiment includes an indoor unit main body 2 and an insect-pest exterminating device 100.

The indoor unit main body 2 is a part of an air conditioning unit, which has an air inlet 4 for drawing room air and an air outlet 6 for discharging conditioned air, and which draws air into the air inlet 4, conditioned the air therein, and discharge it through the air outlet 6. The air conditioner of this type may be a standing-type air conditioner, a ceiling-type air conditioner, or a wall-type air conditioner. The following description will be given by taking a wall-type air conditioner as an example.

The indoor unit main body 2 includes a chassis 10, a front frame 20, a suction grille 21, a front panel 28, and a discharge unit 30.

The indoor unit main body 2 may be configured such that the air inlet 4 is formed on the front surface and upper surface of the indoor unit main body 2 and the air outlet 6 is formed on the lower surface of the indoor unit main body 2 and the front panel 28 moves forward or rotates around an upper or lower part thereof to form an air inlet passage between itself and the front surface of the indoor unit main body 2, or such that the air inlet 4 is formed on the upper surface of the indoor unit main body 2 and the air outlet 6 is formed on the lower surface of the indoor unit main body 2 and the front panel 28 is arranged to cover the front surface of the indoor unit main body 2. The following description will be made with respect to a case where the air inlet 4 is formed in an upper part of the indoor unit main body 2, especially, on the upper surface of the indoor unit main body 2, the air outlet 6 is formed in a lower part of the indoor unit main body 2, especially, on the lower surface of the indoor unit main body 2, the front panel 28 forms the outer appearance of the front side of the air conditioner and is rotatably connected so as to protrude forward with respect to the upper part for services in the indoor unit main body 2.

The chassis 10 is a kind of case, which is installed on a wall of a room and provided with an air blowing flow path through which air passes, and in which a variety of parts are installed.

The front frame 20 forms a space between itself and the chassis 10, and is disposed at a front side of the chassis 10.

The front frame 20 has opening 4 formed on the upper surface and front surface thereof, and the upper opening acts as the air inlet 4, and the front opening 4 acts as a service hole for the attachment/detachment or service of a filter to be described later.

The suction grille 21 protects the lower side of the indoor unit main body 2 while allowing room air to be drawn into the indoor unit main body 2, and is formed in a grille shape on the air inlet 4 which is the upper opening of the front frame 20.

The discharge unit 30 discharges and guides the air conditioned in the indoor unit main body 2, and is assembled to at least one of the chassis 10 and the front frame 20 by fastening means such as a fastening member or by hanging means such as a hook.

The chassis 10 is provided with an air blowing flow path guide 12 for guiding the air sucked by the air inlet and an electric component compartment 13 for installing a variety of electric components therein is formed beside one of the left and right of the air blowing flow path guide 12.

The air blowing flow path guide 12 formed on the chassis 10 forms a passage of a fan 54, and includes left and right guides 15 and 16 protruding forward from the chassis 10 and a central guide 17 disposed between the left and right guides 15 and 16. At one of the left and right guides 15 and 16, a heat exchanger supporter 18 is installed for supporting a heat exchanger 60 and forming an air flow path.

A motor installation part 14 on which a fan motor 52 to be described later is situated and supported is protruded forward on the electric component compartment 13 formed on the chassis 10.

A control box 70 is disposed in the electric component compartment 15. In the control box 70, an indoor unit controller 72 for controlling a wind direction control driver 35 of a wind direction control device and a fan motor 52 of a blower 50 that are to be described later and an insect-pest exterminating device controller 220 to be described later for controlling the insect-pest exterminating device 100 are mounted altogether.

The front frame 20, along with the chassis 10, forms the air blowing flow path, and protects the electric component compartment 13 formed on the chassis 10.

Of the front frame 20, the upper opening 4 is opened upward and downward on the upper side of the front of the flow path guide 12 of the chassis 10.

The discharge unit 30 has a drain part 32 formed on the upper surface for receiving condensed water dropped from the heat exchanger 60 to be described later, a drain connection hose 33 for guiding the condensed water out of the indoor unit main body 2 is connected to the drain portion 32, and the air outlet 6 is opened at a lower portion of the drain part 32.

A wind direction control mechanism for controlling a wind direction of the air passing through the air outlet 6 is installed on the discharge unit 30.

The wind direction control device includes a wind direction controller 34 rotatably disposed on the indoor unit main body 2, especially, on the discharge unit 30 so as to control a wind direction while guiding the air passing through the air outlet 6 and the wind direction control driver 35 for rotating the wind direction controller 34.

The wind direction controller 34 includes a left-and-right wind direction control part for controlling a left-and-right direction of the air passing through the air outlet 6 and an up-and-down wind direction control part for controlling an up-and-down direction of the air passing through the air outlet 6.

The wind direction control driver 35 is connected to the left-and-right wind direction control part to thus enable the left-and-right wind direction control part to rotate around a vertical axis by being, and is also connected to the up-and-down wind direction control part to thus enable the up-and-down wind direction control part to rotate around a horizontal axis.

The wind direction control driver 35 is comprised of a wind direction control motor installed at one of the left and right sides of the discharge unit 30.

Meanwhile, the air conditioner in accordance with this embodiment includes a blower 50 for sucking air to the air inlet 4 to pass through the inside of the indoor unit main body 2 and then discharging it to the air outlet 6 and a heat exchanger 60 for heat-exchanging the air sucked into the indoor unit main body 2 with a refrigerant.

The blower 50 includes a fan motor 52 situated and installed on the motor installation part 14 formed on the chassis 10, especially, the electric component compartment 13, a fan 54 installed on the rotational axis of the fan motor 52 and located on the flow path guide 12, and a motor cover 56 installed on the chassis 10 so as to cover the fan motor 52.

The fan 54 is comprised of a cross-flow fan formed laterally long between the flow path guides 15, 16, and 17, especially, on the left and right flow path guides 15 and 16.

The heat exchanger 60 is arranged to be located in a space of the indoor unit main body 2, especially, on the rear of the front surface of the front frame 20 so as to be located between the air inlet 4 and the fan 54, and the lower end thereof is installed so as to be located on the upper side of the drain part 32.

The heat exchanger 60 includes a vertical portion 62 located vertically to the upper side of the drain part 32, a front inclined portion 64 inclined toward a rear upper side from the upper side of the front inclined portion 64, and a rear inclined portion 66 inclined toward a rear lower side from the upper part of the front inclined portion.

The air conditioner in accordance with this embodiment includes a filter 80 disposed within the indoor unit main body 2 so as to purify the air sucked to the air inlet 4 and a filter frame 90 for mounting the filter 80 thereon.

The filter frame 90 is located between the air inlet 4 and the heat exchanger 60, and is provided with an opening 91 in which air passes and the filter 80 is disposed.

The insect-pest exterminating device 100 exterminates or induces insect pests such as mosquitoes inhabiting in a room conditioned by the air conditioner, and is attached to the indoor unit main body 2.

The insect-pest exterminating device 100 is provided with an output unit 102 for outputting sound waves of a specific frequency repellent to insect pests including mosquitoes, flies, ticks, and etc. Further, the insect-pest exterminating device 10 further includes, as described later, an insect-pest exterminating device controller 180 and an amplifier that output pulses signals.

The output unit 102 of the insect-pest exterminating device 100 may be a speaker for converting an electrical signal into a sound wave signal. The output unit 102 of the insect-pest exterminating device 100 may be fixedly installed on the indoor unit main body 2, or may be movably installed on the indoor unit main body 2. Hereinafter, a description will be given of a case in which the output unit 102 is fixedly installed on the indoor unit main body 2.

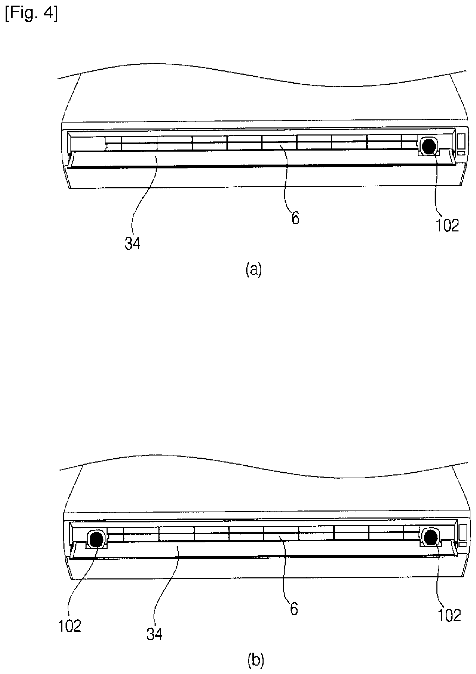

FIG. 4 is a view showing an example in which the speaker of the insect-pest exterminating device is installed.

Referring to FIG. 4(a), the output 102 of the insect-pest exterminating device 100 is disposed at a right side of the air outlet 6. As such, since the output unit 102 of the insect-pest exterminating device 100 is disposed in a manner to be covered by the wind direction controller 34, the output unit102 can be efficiently and easily implemented by being exposed only when the wind direction controller 34 is opened.

Referring to FIG. 4(b), the output unit 102 of the insect-pest exterminating device 100 may be disposed at both of right and left sides of the air outlet 6. As shown in FIG. 4(b), the output unit 102 can be efficiently and easily implemented as it is exposed only when the wind direction controller 34 is opened. Moreover, the level of a sound wave signal output from the output unit 102 is further increased, thus making the output unit 102 more efficient for insect-pest extermination. On the other hand, if the insect-pest exterminating device 100 is provided with a plurality of output units, it is possible for each of the output units to output sound wave signals of different frequencies.

FIGS. 4(a) and 4(b) show that air is discharged from the air outlet 6 as the wind direction controller 34 is opened. The air discharged from the air outlet 6 may be a heat-exchanged air according to whether the indoor unit operates or not.

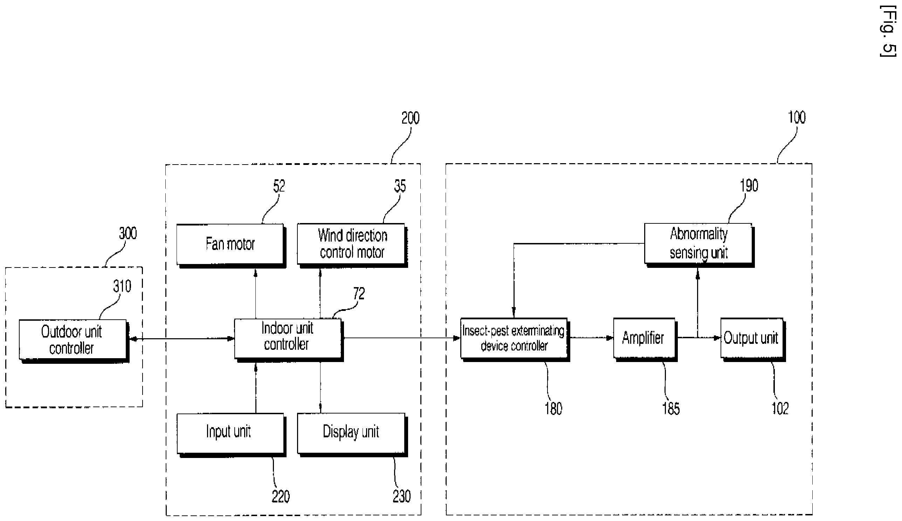

FIG. 5 is a schematic interior block diagram of an air conditioner in accordance with the embodiment of the present invention.

Referring to the drawing, the air conditioner in accordance with an embodiment of the present invention includes an indoor unit 200 and an insect-pest exterminating device 100.

As described above, the indoor unit 200 includes an indoor unit main body 2 comprising a front panel 28, an air inlet 4 disposed at a side surface of the front panel 28, an air outlet 6 disposed at a side surface of the front panel 28, and a wind direction controller 34 for controlling the wind direction of discharged air and opening and closing the air outlet 6.

Further, the indoor unit 200 may further include a blower 50 driven by a fan motor 52, a wind direction controller 34 driven by a wind direction control motor 35, a heat exchanger 60 for heat-exchanging sucked air with a refrigerant, an indoor unit controller 72 for controlling the overall operation of the indoor unit, an input unit 220 for receiving an operation command from a user, and a display unit 230 for displaying an output state of a sound wave signal.

The indoor unit controller 72 may control the overall operation of the indoor unit. For example, when an operation signal of the air conditioner is received from the input unit 220, such as a remote control, the indoor unit controller 72 may control the air conditioner to start its operation according to the operation signal. At this time, the indoor unit controller 72 may control a compressor (not shown) of an outdoor unit to be driven by communication with an outdoor unit controller 310 in the outdoor unit 300.

The indoor unit controller 72 may control the fan motor 52 so that the blower 50 of the indoor unit operates according to the driving of the compressor (not shown) of the outdoor unit, and may control the wind direction control motor 35 so as to open the wind direction controller 34. By virtue of this control, sucked air of a room is heat-exchanged in the heat exchanger 60, and the heat-exchanged air is discharged again to the room.

The indoor unit controller 72 may output an operation signal to an insect-pest exterminating device controller 180 within the insect-pest exterminating device 100. This operation signal may be generated and output in case that an indoor unit operation command is inputted from the input unit 220 or an insect-pest extermination operation command is inputted therefrom. That is, the insect-pest exterminating device 100 may operate in the operation mode of the indoor unit or in an insect-pest extermination mode in which the indoor unit is not operated but only sound waves are output.

The insect-pest exterminating device 100 exterminates or induces insect pests such as mosquitoes inhabiting in a room conditioned by the air conditioner, and is attached to the indoor unit main body 2.

The insect-pest exterminating device 100 is provided with an output unit 102 for outputting sound wave signals of a frequency repellent to insect pests including mosquitoes (for example, dengue mosquitoes). By virtue of this, insect-pests can be efficiently exterminated.

The kinds of insect-pests include flies, mosquitoes, ticks, moths, dayflies, and so on can be exterminated. Also, there are various species of flies and mosquitoes distributed worldwide.

The insect-pest exterminating device 100 may output a sound wave signal of a repelling frequency band according to the types of insect pests. Here, the repelling frequency band is a frequency band repellent to all sorts of insect pests, which preferably ranges from 20kHz to 100kHz. Within this frequency band, frequencies repellent to flies, mosquitoes, ticks, moths, and dayflies are different from each other. Thus, in the exemplary embodiment of the present invention, the repelling frequency is varied according to the type of an insect to output a sound wave signal.

Also, a sensed male wing-beat sound frequency of insect pests can be used as the repelling frequency.

The male wing-beat sound frequency of insect pests may range approximately from 200Hz to 600Hz. For example, the male wing-beat sound frequency of encephalitis mosquitoes or culex pipiens pallens ranges approximately from 200Hz to 600Hz, the male wing-beat sound frequency of malaria mosquitoes ranges from 300Hz to 600Hz, and the male wing-beat sound frequency of Aedes Aegypti is approximately 600Hz, and hence a male wing-beat sound frequency can be used. The insect-pest exterminating device 100 of this type may further include an output unit 102, an insect-pest exterminating device controller 180, and an amplifier 185. In addition, the insect-pest exterminating device 100 may further include an abnormality sensing unit 190.

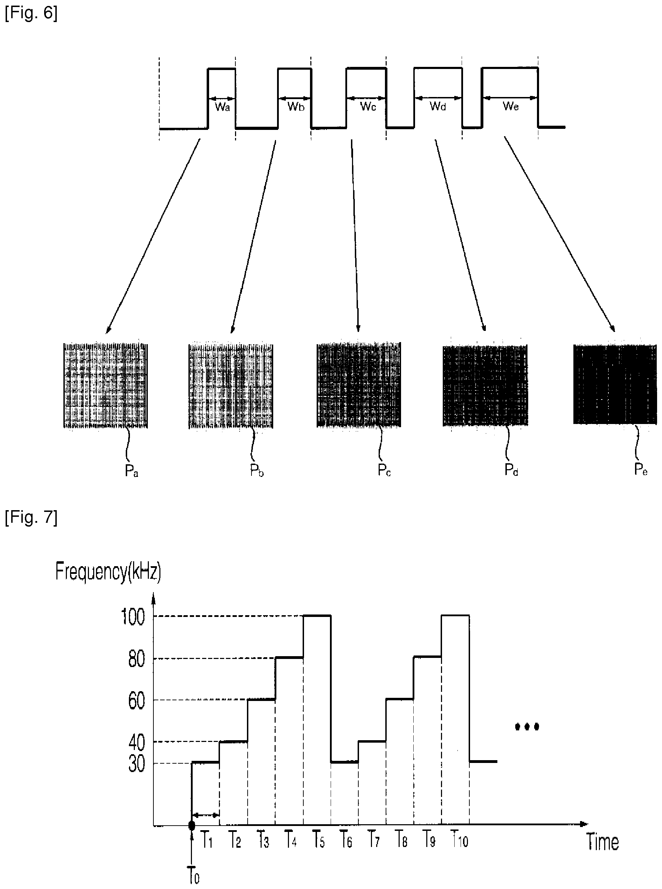

The output unit 102 converts the pulse signals whose level is amplified in the amplifier 185 into sound signals, respectively, and outputs them. The frequency of the sound wave signals output from the output unit 102 preferably ranges approximately from 20kHz to 100kHz. This frequency band is known as a frequency band repellent to various types of insect pests. An explanation of the frequencies and the extermination of insect pests will be described later with reference to FIG. 7.

The insect-pest exterminating device controller 180 operates by receiving an operation signal from the input unit 220 or the indoor unit controller 72. That is, when power of approximately 5V is supplied from a power supply unit (not shown), the insect-pest exterminating device controller 180 starts its operation upon receipt of an operation signal. Therefore, the insect-pest exterminating device controller 180 outputs pulses signals for generating repelling frequencies.

Here, the operation signal received by the insect-pest exterminating device controller 180 may be an indoor unit operation actuating signal or insect-pest extermination actuating signal which is directly received from the input unit 220, such as a remote control. Also, the operation signal received by the insect-pest exterminating device controller 180 may be an indoor unit operation actuating signal or insect-pest extermination actuating signal which is received through the indoor unit controller 72.

The insect-pest exterminating device controller 180 may perform a pulse width modulation (PWM) of pulse signals to vary the repelling frequencies. By virtue of this, the repelling frequencies may be varied in a simple way.

For example, in order to exterminate various kinds of insect-pests, pulse width modulation may be performed to generate a plurality of repelling frequencies. That is, pulse signals having different repelling frequencies are generated according to a pulse width varied by pulse width modulation. In particular, the greater the pulse width, the higher the repelling frequency of a generated pulse signal.

Although not shown, such a plurality of repelling frequencies may be determined by an insect-pest type sensing unit (not shown) for sensing the type of an insect-pest.

The amplifier 185 amplifies the level of pulse signals output from the insect-pest exterminating device controller 180. That is, the amplifier 185 amplifies the level of input pulse signals when supplied with a power of approximately 12V from a power supply unit (not shown). The amplifier 185 may be implemented in various forms, including an OP amp, a transistor, etc.

The output unit 102 is a speaker, may be implemented as a metal device, and vibrates and outputs a sound wave signal according to an input pulse signal. For example, the speaker may be implemented to have a diameter of approximately 50mm, but the present invention is not limited thereto and may be implemented in various shapes and sizes.

The insect-pest exterminating device controller 180 and the amplifier 185 may be mounted and disposed on the same substrate, and the amplifier 185 and the output unit 102 may be electrically connected by wiring.

This wiring may include a pulse signal transmission wring for transmitting pulse signals amplified in the amplifier 185 to the output unit 102 and a power supply wiring for supplying power to the output unit 120.

The insect-pest exterminating device controller 180 and amplifier 185 mounted on the same substrate may be disposed side by side to the control box 70, along with the substrate on which the indoor unit controller 72 is mounted, as described above.

If a sound wave signal is output from the insect-pest exterminating device 100, the indoor unit controller 72 may control the display unit 230 so as to display this situation. Since the sound wave signal output from the insect-pest exterminating device 100 may not be within an audible range but within a frequency range of 20kHz to 100kHz, it is preferred to display through the display unit 230 whether a sound wave signal is output or not so that the user can intuitively recognize the operation of the insect-pest exterminating device.

The display unit 230 may be implemented by having a light emitting diode for emitting light. If a sound wave signal is output, the display unit 230 may display this situation in various examples. For instance, the display unit 230 may display such that the number of times of light emission per unit time or the light emission amount can increase in proportion to the frequency band of a sound wave signal. Accordingly, the user can intuitively know whether or not a sound wave signal is generated and the approximate frequency of a sound wave signal being output.

The abnormality sensing unit 190 detects the level of a pulse signal output from the amplifier 185, and if the detected level of the pulse signal exceeds a preset value, this is considered as an abnormal operation. If considered as an abnormal operation, the abnormality sensing unit 190 outputs an operation stop signal to the insect-pest exterminating device controller 180. Therefore, the insect-pest exterminating deice controller 180 stops its operation, and hence no pulse signal is output.

FIG. 6 is a view showing the generation of a pulse signal using pulse width modulation in the insect-pest exterminating device controller of FIG. 5.

Referring to the drawing, the insect-pest exterminating device controller 180 performs pulse width modulation sequentially with time. In the drawing, pulse widths Wa, Wb, Wc, Wd, and We that are varied by pulse width modulation are illustrated, and it is shown that the pulse width sequentially increases, but the present invention is not limited thereto. Pulse signals Pa, Pb, Pc, Pd, and Pe having different frequencies are generated according to the respective pulse widths Wa, Wb, Wc, Wd, and We. As in the drawing, the larger the pulse width, the higher the frequency of a generated pulse signal.

The insect-pest exterminating device controller 180 generates corresponding pulse signals according to automatically set pulse widths. Thus, the output unit 102 finally outputs sound wave signals according to the corresponding pulse signals. Various patterns of the sound wave signals output from the output unit 102 will be described hereinafter.

FIGS. 7 to 9 are views showing various examples of sound wave signals output from the insect-pest exterminating device.

FIGS. 7 to 9 show that the insect-pest exterminating device 100 operates from the time To when an operation signal is output from the indoor unit controller 72, and a first sound wave signal, second sound wave signal, third sound wave signal, fourth sound wave signal, and fifth sound wave signal of different frequencies are output, and then the first to fifth sound wave signals are repeated.

First, FIG. 7 shows that a first sound wave signal of 30kHz, a second sound wave signal of 40kHz, a third sound wave signal of 60kHz, a fourth sound wave signal of 80kHz, and a fifth sound wave signal of 100kHz are sequentially output, and then the first sound wave signal of 30kHz to fifth sound wave signal of 100kHz are repeated. Here, the output periods T1∼T10 of the respective sound wave signals may be set equally. By virtue of this, in a case where various kinds of insect pests are present in a room, they can be exterminated indiscriminately.

The following Table 1 shows the number of insect-pests exterminated and the extermination rate of insect-pests when a plurality of sound wave signals were sequentially output. Experiments 1 to 3 were carried out by putting 50 insect-pests in an enclosed space and sequentially outputting a plurality of sound wave signals having a frequency of 30kHz, 40kHz, 60kHz, 80kJz, and 100kHz. And, the intervals between the sound wave signals were set to 12 minutes.

### Table 1

### [Table 1]

**[Table]**

| hour | Experiment 1 | | Experiment 2 | | Experiment 3 | |
|---|---|---|---|---|---|---|
| | Number of exterminat ions | Exterminati on rate (%) | Number of exterminatio ns | Exterminati on rate (%) | Number of exterminatio ns | Exterminati on rate (%) |
| 12345 624 | 23667104 1 | 4612121429 82 | 00000128 | 00000256 | 22223442 | 44446884 |

In Table 1, it can be seen that when the output time of sound wave signals is between 1 hour and 6 hours, the number of exterminated insect-pests was no more than 10, but as the output time continued for about 24 hours, the number of exterminated insect-pests significantly increased. From these experiment results, it can be seen that the insect-pests were exterminated by consecutively outputting a plurality of sound wave signals for a given period of time. Moreover, tolerance of insect-pests to sound wave signals can be eliminated by sequentially and repetitively outputting a plurality of sound wave signals.

The following Table 2 shows the number of insect-pests exterminated and the extermination rate of insect-pests when there was no sound wave signal output.

### Table 2

**[Table 2]**

| [Table] | | | | | | |
|---|---|---|---|---|---|---|
| hour | Experiment 1 | | Experiment 2 | | Experiment 3 | |
| | Number of exterminations D | Exterminati on rate (%) | Number of exterminatio ns | Exterminati on rate (%) | Number of exterminatio ns | Exterminati on rate (%) |
| 12345 624 | 0000003 | 0000006 | 0000004 | 0000008 | 0000004 | 0000008 |

In Table 2, it can be seen that some of the insect-pests were naturally exterminated with the passage of time. However, the number of exterminated insect-pests is no more than 4.

Resultantly, when comparing Table 1 and Table 2, it can be seen that the insect-pests were effectively exterminated by sequentially outputting a plurality of sound wave signals according to the exemplary embodiment of the present invention.

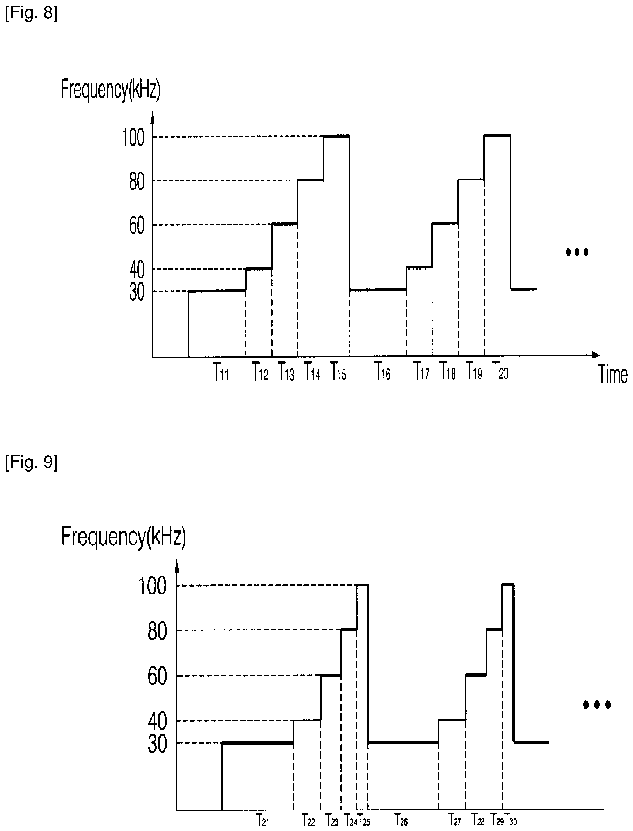

Next, unlike FIG. 7, FIG. 8 shows that the output periods T11 and T16 of the first sound wave signal of 30kHz are different from the output periods T12 and T17 of the second sound wave signal of 40kHz, respectively. Particularly, it is shown that the output periods T11 and T16 of the first sound wave signal of 30kHz are longer than the output periods T12 and T17 of the second sound wave signal of 40kHz. Therefore, among various kinds of insect pests, the ones susceptible a sound signal of a specific band can be exterminated more preferentially. That is, in order to eliminate the insect-pests susceptible to a sound wave signal of a specific band among the plurality of sound wave signals, it is possible to vary the output periods of a plurality of sound wave signals by giving different weighted values. These-time weighted values can be determined by the user's setting using the input unit 220, such as a remote control.

Next, unlike FIG. 7, FIG. 9 shows that the output periods T21∼T30 of the first sound wave signal of 30kHz to fifth sound wave signal of 100kHz are all different. Particularly, the lower the frequency of a sound wave signal, the longer period it is output for. In the drawing, it is shown that the output periods T21 and T26 of the first sound wave signal of 30kHz are the longest. Therefore, the insect-pests susceptible to a sound signal of a low frequency band, among the sound wave signals of 30kHz to 100kHz bands, can be exterminated efficiently.

Meanwhile, in consideration of the heat generated in the insect-pest exterminating device 100, it is possible that a first sound wave signal of 30kHz, a second sound wave signal of 100kHz, a third sound wave signal of 40kHz, a fourth sound wave signal of 80kHz, and a fifth sound wave signal of 60kHz are sequentially output, and then the first sound wave signal of 30kHz to fifth sound wave signal of 60kHz are repeated.

Also, the insect-pest exterminating device 100 is able to vary the frequency of an output sound wave signal corresponding to the discharge velocity of the air discharged from the air conditioner. For example, the higher the velocity of discharged air, the higher the frequency of a sound wave signal.

Moreover, during initial driving of the air conditioner, sound wave signals can be sequentially output in the order of high to low frequency band.

While the embodiment of the present invention has been described with reference to the attached drawings, those skilled in the art will appreciate that the present invention can be implemented in other detailed forms without departing from the scope of the appending claims. Therefore, it should be understood that the above embodiments are only exemplary, but are not limited. The scope of the present invention is defined by the accompanying claims.

## Claims

1. An air conditioner, comprising:
an indoor unit main body (2) having an air inlet (4) for drawing room air and an air outlet (6) for discharging conditioned air; and
an insect-pest exterminating device (100) attached to the indoor unit main body (2), and for exterminating insect pests,
the insect-pest exterminating device (100) including:
an insect-pest exterminating device controller (180) for outputting a plurality of pulse signals; an amplifier (185) for amplifying the level of the pulse signals; and an output unit (102) for converting the pulses signals whose level is amplified into a plurality of sound wave signals and outputting the same, **characterized in that** the insect-pest exterminating device (100) sequentially outputs a first, a second, a third, a fourth, and a fifth sound wave signals having different frequencies, and
wherein the plurality of sound wave signals having different frequencies are respectively output during a predetermined time.

2. The air conditioner of claim 1, wherein the insect-pest exterminating device (100) sequentially outputs the first, the second, the third, the fourth, and the fifth sound wave signals having different frequencies, and
wherein the first sound wave signals of 30 kHz, the second sound wave signals of 100 kHz, the third sound wave signal of 40 kHz, the fourth sound wave signals of 80 kHz, and the fifth sound wave signals of 60 kHz are sequentially output, and then the first sound wave signals of 30 kHz to the fifth sound wave signals of 60 kHz are repeated.

3. The air conditioner of claim 2, wherein the insect-pest exterminating device (100) sequentially outputs the plurality of sound wave signals at intervals of 12 minutes.

4. The air conditioner of claim 1, further comprising a display unit (230) for displaying an output state of the sound wave signals.

5. The air conditioner of claim 4, wherein the display unit (230) emits light when the sound wave signals are output, and the higher the frequency of the sound wave signals, the larger the number of times of light emission per unit time.

6. The air conditioner of claim 1, wherein the insect-pest exterminating device (100) further comprises a sensing unit (190) for detecting the level of the pulse signals whose level is amplified, and if a preset value is exceeded, considering this situation as an abnormal operation and outputting an operation stop signal, and
the insect-pest exterminating device stops its operation upon receipt of the operation stop signal.

7. The air conditioner of claim 1, wherein the insect-pest exterminating device controller (180) operates by receiving an operation signal directly from the input unit or receiving an operation signal through an indoor unit controller (72).

8. The air conditioner of claim 1, wherein the operation signal is an indoor unit operation actuating signal or insect-pest extermination actuating signal.

9. The air conditioner of claim 1, wherein the output unit (102) is disposed at least one of both sides of the air outlet (96).

10. The air conditioner of claim 1, wherein the indoor unit main body (2) includes a wind direction controller (34) which controls the wind direction of air discharged from the air outlet (6) and is disposed to open and close the air outlet (6).

11. The air conditioner of claim 10, wherein the output unit (102) of the insect-pest exterminating device (100) is exposed to the room when the air outlet (6) is opened by the wind direction controller (34).

## Patentansprüche

1. Klimaanlage, die aufweist:
einen Inneneinheitshauptkörper (2) mit einem Lufteinlass (4) zum Ansaugen von Raumluft und einem Luftauslass (6) zum Abgeben von klimatisierter Luft; und
Insektenplagen-Auslöschungsvorrichtung (100), die an dem Inneneinheitshauptkörper (2) befestigt ist und zum Auslöschen von Insektenplagen dient,
wobei die Insektenplagen-Auslöschungsvorrichtung (100) aufweist:
eine Insektenplagen-Auslöschungsvorrichtungssteuerung (180) zum Ausgeben mehrerer Impulssignale; einen Verstärker (185) zum Verstärken des Pegels des Impulssignals; und eine Ausgangseinheit (102) zum Umwandeln der Impulssignale, deren Pegel verstärkt ist, in mehrere Schallwellensignale und Ausgeben dieser,
**dadurch gekennzeichnet, dass**
die Insektenplagen-Auslöschungsvorrichtung (100) nacheinander ein erstes, ein zweites, ein drittes, ein viertes und ein fünftes Schallwellensignal mit unterschiedlichen Frequenzen ausgibt, und
wobei die mehreren Schallwellensignale mit verschiedenen Frequenzen jeweils während einer vorgegebenen Zeit ausgegeben werden.

2. Klimaanlage nach Anspruch 1, wobei die Insektenplagen-Auslöschungsvorrichtung (100) nacheinander das erste, das zweite, das dritte, das vierte und das fünfte Schallwellensignal mit unterschiedlichen Frequenzen ausgibt, und
wobei die ersten Schallwellensignale mit 30 kHz, die zweiten Schallwellensignale mit 100 kHz, die dritten Schallwellensignale mit 40 kHz, die vierten Schallwellensignale mit 80 kHz und die fünften Schallwellensignale mit 60 kHz nacheinander ausgebegeben werden, und dann die ersten Schallwellensignale mit 30 kHz bis zu den fünften Schallwellensignalen mit 60 kHz wiederholt werden.

3. Klimaanlage nach Anspruch 2, wobei die Insektenplagen-Auslöschungsvorrichtung (100) nacheinander die mehreren Schallwellensignale in Zeitabständen von 12 Minuten ausgibt.

4. Klimaanlage nach Anspruch 1, die ferner eine Anzeigeeinheit (230) zum Anzeigen eines Ausgabezustands der Schallwellensignale aufweist.

5. Klimaanlage nach Anspruch 4, wobei die Anzeigeeinheit (230) Licht emittiert, wenn die Schallwellensignale ausgegeben werden, und die Anzahl von Malen der Lichtemission pro Einheitszeit umso höher ist, je höher die Frequenz der Schallwellensignale ist.

6. Klimaanlage nach Anspruch 1, wobei die Insektenplagen-Auslöschungsvorrichtung (100) ferner eine Abtasteinheit (190) aufweist, um den Pegel der Impulssignale abzutasten, deren Pegel verstärkt wird, und wenn ein vorgegebener Wert überschritten wird, diese Situation als ein unnormaler Betrieb betrachtet wird und ein Betriebsstoppsignal ausgegeben wird, und
die Insektenplagen-Auslöschungsvorrichtung ihren Betrieb nach Empfang des Betriebsstoppsignals stoppt.

7. Klimaanlage nach Anspruch 1, wobei die Insektenplagen-Auslöschungsvorrichtungssteuerung (180) arbeitet, indem sie ein Bediensignal direkt von der Eingabeeinheit empfängt oder ein Bediensignal durch eine Inneneinheitssteuerung (72) empfängt.

8. Klimaanlage nach Anspruch 1, wobei das Bediensignal ein Inneneinheitsbetriebsbetätigungssignal oder ein Insektenplagen-Auslöschungsbetätigungssignal ist.

9. Klimaanlage nach Anspruch 1, wobei die Ausgangseinheit (102) wenigstens auf beiden Seiten des Luftauslasses (96) angeordnet ist.

10. Klimaanlage nach Anspruch 1, wobei der Inneneinheitshauptkörper (2) eine Windrichtungssteuerung (34) aufweist, welche die Windrichtung von Luft steuert, die von dem Luftauslass (6) abgegeben wird, und eingerichtet ist, um den Luftauslass (6) zu öffnen und zu schließen.

11. Klimaanlage nach Anspruch 10, wobei die Ausgangseinheit (102) der Insektenplagen-Auslöschungsvorrichtung (100) zu dem Raum freiliegt, wenn der Luftauslass (6) durch die Windrichtungssteuerung (34) geöffnet wird.

## Revendications

1. Climatiseur, comprenant :
un corps principal d'unité intérieure (2) ayant un orifice d'entrée d'air (4) pour aspirer l'air de la pièce et un orifice de sortie d'air (6) pour évacuer l'air conditionné ;
et
un dispositif d'extermination d'insectes ravageurs (100) fixé au corps principal d'unité intérieure (2), et destiné à exterminer des insectes ravageurs,
le dispositif d'extermination d'insectes ravageurs (100) comportant :
un dispositif de commande de dispositif d'extermination d'insectes ravageurs (180) pour fournir en sortie une pluralité de signaux à impulsions ; un amplificateur (185) pour amplifier le niveau des signaux à impulsions ; et une unité de sortie (102) pour convertir les signaux à impulsions dont le niveau est amplifié en une pluralité de signaux d'ondes sonores et fournir ceux-ci en sortie,
**caractérisé en ce que**
le dispositif d'extermination d'insectes ravageurs (100) fournit séquentiellement en sortie un premier, un deuxième, un troisième, un quatrième et un cinquième signal d'onde sonore ayant des fréquences différentes, et
dans lequel la pluralité de signaux d'onde sonore ayant des fréquences différentes sont respectivement fournis en sortie pendant un temps prédéterminé.

2. Climatiseur selon la revendication 1, dans lequel le dispositif d'extermination d'insectes ravageurs (100) fournit séquentiellement en sortie le premier, le deuxième, le troisième, le quatrième et le cinquième signal d'onde sonore ayant des fréquences différentes, et
dans lequel le premier signal d'onde sonore de 30 kHz, le deuxième signal d'onde sonore de 100 kHz, le troisième signal d'onde sonore de 40 kHz, le quatrième signal d'onde sonore de 80 kHz et le cinquième signal d'onde sonore de 60 kHz sont fournis séquentiellement en sortie, puis le premier signal d'onde sonore de 30 kHz jusqu'au cinquième signal d'onde sonore de 60 kHz sont répétés.

3. Climatiseur selon la revendication 2, dans lequel le dispositif d'extermination d'insectes ravageurs (100) fournit séquentiellement en sortie la pluralité de signaux d'onde sonore à des intervalles de 12 minutes.

4. Climatiseur selon la revendication 1, comprenant en outre une unité d'affichage (230) pour afficher un état de sortie des signaux d'onde sonore.

5. Climatiseur selon la revendication 4, dans lequel l'unité d'affichage (230) émet une lumière lorsque les signaux d'onde sonore sont fournis en sortie, et plus la fréquence des signaux d'onde sonore est élevée, plus le nombre d'occurrences d'émission de lumière par unité de temps est grand.

6. Climatiseur selon la revendication 1, dans lequel le dispositif d'extermination d'insectes ravageurs (100) comprend en outre une unité de détection (190) pour détecter le niveau des signaux à impulsions dont le niveau est amplifié, et si une valeur préétablie est dépassée, pour considérer cette configuration comme un fonctionnement anormal et fournir en sortie un signal d'arrêt de fonctionnement, et le dispositif d'extermination d'insectes ravageurs arrête son fonctionnement lors de la réception du signal d'arrêt de fonctionnement.

7. Climatiseur selon la revendication 1, dans lequel le dispositif de commande de dispositif d'extermination d'insectes ravageurs (180) fonctionne en recevant un signal de fonctionnement directement de l'unité d'entrée ou en recevant un signal de fonctionnement par l'intermédiaire d'un dispositif de commande d'unité intérieure (72).

8. Climatiseur selon la revendication 1, dans lequel le signal de fonctionnement est un signal d'actionnement de fonctionnement d'unité intérieure ou un signal d'actionnement d'extermination d'insectes ravageurs.

9. Climatiseur selon la revendication 1, dans lequel l'unité de sortie (102) est disposée au niveau d'au moins l'un des deux côtés de l'orifice de sortie d'air (96).

10. Climatiseur selon la revendication 1, dans lequel le corps principal d'unité intérieure (2) comporte un dispositif de commande de direction du vent (34) qui commande la direction du vent de l'air évacué depuis l'orifice de sortie d'air (6) et est disposé pour ouvrir et fermer l'orifice de sortie d'air (6).

11. Climatiseur selon la revendication 10, dans lequel l'unité de sortie (102) du dispositif d'extermination d'insectes ravageurs (100) est exposée à la pièce lorsque l'orifice de sortie d'air (6) est ouvert par le dispositif de commande de direction du vent (34).
